# EUROPEAN PATENT APPLICATION

(11) **EP 4 796 387 A1**
(43) Date of publication of application: **26.08.2026**
(21) Application number: 26155890.2
(22) Date of filing: 03.02.2026
(51) Int. Cl.: B60Q 1/26, B60Q 1/52

(54) **PORTABLE EMERGENCY BEACON LIGHT FOR EMERGENCY VEHICLES**

(30) Priority: 11.02.2025 ES 202530105
(71) Applicant: Federal Signal Vama, S.A.U., 08339 Vilassar de Dalt (Barcelona) (ES)
(72) Inventor: MUÑOZ, Juan José, 08339 Vilassar De Dalt (Barcelona) (ES)
(74) Representative: Ungria López, Javier

(57) **Abstract**

There is disclosed a portable emergency beacon light (1) for emergency vehicles, comprising: a lower casing (2), which has a cylindrical shape with a diameter of less than 8 cm; an upper lens (3); a control plate (4); a light emitter (5), which has a hexagonal prism shape. The light emitter (5) is fixed perpendicular to the control plate. The light emitter comprises, on each of the faces of the hexagonal prism: a set of LED lights (6) and an optic (7) located over each set of LED lights (6). The beacon light further comprises a microcontroller (8) configured to send control signals, and a set of drivers (9), which is connected with the microcontroller and with the set of LED lights (6). The set of drivers is configured to activate/deactivate each LED according to the control signals received from the microcontroller (8).

## Description

### OBJECT OF THE INVENTION

The present invention relates to a portable emergency beacon light for emergency vehicles.

As a result of its characteristics, the beacon light of the present invention allows use thereof inside and outside the vehicle. Furthermore, the beacon light of the present invention has the special advantage of enabling transportation in the housing provided in vehicles for beverage cans, jars, and bottles.

The technical field is the field of emergency light devices for vehicles intended as emergency vehicles.

### BACKGROUND OF THE INVENTION

Among emergency vehicles, there are vehicles that lack distinctive external features to indicate that they are emergency vehicles so that they go unnoticed among other vehicles. Among law enforcement authorities, these vehicles are popularly known as "unmarked vehicles."

Since vehicles of this type have to go unnoticed, they need emergency lights (emergency beacon lights) which can be carried inside the vehicle without being seen from outside.

Considering that emergency vehicles are vehicles adapted from common commercial vehicles, these vehicles are not designed to carry emergency lights. This results in the emergency lights not having a defined part for transporting emergency lights inside the vehicle. Accordingly, emergency lights of the state of the art move as free bodies inside the vehicle with the associated safety risk it entails for the occupants.

### DESCRIPTION OF THE INVENTION

In order to solve the problems indicated in the state of the art, the present invention discloses a portable emergency beacon light for emergency vehicles which, as a result of its cylindrical shape with a diameter of less than 8 cm, can be transported in the receptacles provided in cars for beverage cans and bottles. Furthermore, as a result of its configuration and fixing means, the portable emergency beacon light of the present invention can be fixed to the windscreen or to the roof of the vehicle, adapting the horizontal light emission to 180° or 360°, respectively, so that the occupants of the vehicle will not be blinded by it if it is used inside the vehicle (180°).

Furthermore, the emergency beacon light of the present invention is designed to comply with Category T of ECE R65 in terms of its 360° mode of operation. It can comply with both Class 2 (daytime and night-time light conditions) and Class 1 (night-time light conditions) of said standard in blue, red, or amber colours.

Therefore, a first aspect of the invention discloses a portable emergency beacon light for emergency vehicles. The beacon light comprises: a lower casing, which has a cylindrical shape with a diameter of less than 8 cm; an upper lens, which is configured to be fixed to the lower casing; a control plate located in the upper part of the lower casing; a light emitter, which has a hexagonal prism shape and where the light emitter is fixed perpendicular to the control plate. In turn, the light emitter comprises, on each of the faces of the hexagonal prism: a set of LED lights and an optic located over the set of LED lights. The beacon light further comprises a microcontroller configured to send control signals; and a set of drivers connected with the microcontroller. Each driver of the set of drivers is connected with a set of LED lights of those comprised in the light emitter with a hexagonal prism shape. Each driver of the set of drivers is configured to activate/deactivate each LED of each set of LED lights according to the control signals received from the microcontroller.

Preferably, the microcontroller and the set of drivers are located on the control plate.

In an embodiment of the invention, the portable emergency beacon light for emergency vehicles may further comprise a magnet in the lower part of the lower casing. The magnet is configured to fix the portable emergency beacon light of the present invention to the roof of the emergency vehicle.

In another embodiment of the invention, the portable emergency beacon light for emergency vehicles may further comprise a magnetic sensor placed in an inner perimeter part of the lower casing. The magnetic sensor is connected with the microcontroller, which is configured to send control signals to the set of drivers for activating the sets of LED lights on three consecutive faces of the light emitter when the magnetic sensor is activated as a result of a magnet. When the magnetic sensor is activated, the beacon light only emits light 180° horizontally. Therefore, when the beacon light is placed on the dashboard of an emergency vehicle, the beacon light emits light towards the windscreen and not towards the occupants of the emergency vehicle given that the LED lights are only switched on 180°. To indicate the position of the magnetic sensor, the lower casing comprises externally a recess coinciding with the position of the magnetic sensor.

In another embodiment of the invention, the light emitter may comprise a light sensor, which is connected with the microcontroller. The light sensor is configured to indicate the environmental light conditions to the microcontroller. The microcontroller is configured to send control signals to the set of drivers for activating the sets of LED lights with light intensity selected from at least 60 cd (candelas) in night mode at 0° (night-time lighting conditions) and at least 120 cd (candelas) in day mode at 0° (daytime lighting conditions). The light sensor is located on the upper face of the hexagonal prism of the light emitter to capture the outside light without interference from the emission of the beacon light itself.

In another embodiment of the invention, the portable emergency beacon light for emergency vehicles may further comprise a power cable, at the end of which there is located a power connector compatible with power supply means comprised in the emergency vehicle. Typically, the power supply means comprised in the emergency vehicle will be a 12 v power outlet. The power connector comprises 2 backlit buttons in which one button selects the 180° function and the other button selects the 360° function. The backlit buttons are connected with the microcontroller. The microcontroller is configured to send control signals to the set of drivers that carries out the activation of the set of LED lights on three consecutive faces of the light emitter when one button is pressed or on all six faces of the light emitter when the other button of the power connector is pressed. In this way, manual activation of emergency light emission at 180° and 360°, both horizontally, is achieved.

The portable emergency beacon light for emergency vehicles may further comprise a power supply circuit and an input/output circuit, where they are both connected with the microcontroller and with the power connector by means of the power cable. The power supply circuit transforms the 12 v from the power supply outlet of the vehicle into the voltages required by the components of the beacon light.

In another embodiment of the invention, the portable emergency beacon light for emergency vehicles may further comprise a telescopic fixing arm for fixing the beacon light to the windscreen of an emergency vehicle. In this way, the beacon light can be supported on the dashboard of the emergency vehicle and fixed to the windscreen to prevent it from moving. The fixing arm, being telescopic, is suitable for dashboards of any size. The telescopic fixing arm may further comprise a magnet at one of the ends thereof to, once fixed on the magnetic sensor of the beacon light, perform a double function: holding the beacon light and activating the light 180° horizontally. To complete the fixing of the beacon light to the windscreen, the telescopic fixing arm may further comprise a suction cup at the other end of the telescopic fixing arm.

### BRIEF DESCRIPTION OF THE FIGURES

Figure 1 shows the external appearance of the portable emergency beacon light for emergency vehicles, including the telescopic fixing arm, according to an embodiment of the present invention.
Figure 2 shows the external appearance of the portable emergency beacon light for emergency vehicles according to an embodiment of the present invention.
Figure 3 shows the internal components of the portable emergency beacon light for emergency vehicles according to an embodiment of the present invention.
Figure 4 shows a perspective view of the internal components of the portable emergency beacon light for emergency vehicles according to an embodiment of the present invention.
Figure 5 shows a block diagram of the electric/electronic components of the portable emergency beacon light for emergency vehicles according to an embodiment of the present invention.

A list of the references used in the figures is provided below:
1. Portable emergency beacon light for emergency vehicles;
2. Lower casing;
3. Upper lens;
4. Control plate;
5. Light emitter;
6. Set of LED lights on each face of the hexagonal prism of the light emitter;
7. Optics;
8. Microcontroller;
9. Set of drivers;
10. Lower magnet of the lower casing;
11. Magnetic sensor;
12. Power cable;
13. Recess of the lower casing;
14. Light sensor;
15. Power connector; 180° and 360° buttons 15' and 15";
16. Not used;
17. Power supply circuit;
18. Telescopic fixing arm;
19. Magnet of the telescopic fixing arm;
20. Suction cup of the telescopic fixing arm;
21. Sealing gasket;
22. Input/output circuit.

### DESCRIPTION OF A PREFERRED EMBODIMENT OF THE INVENTION

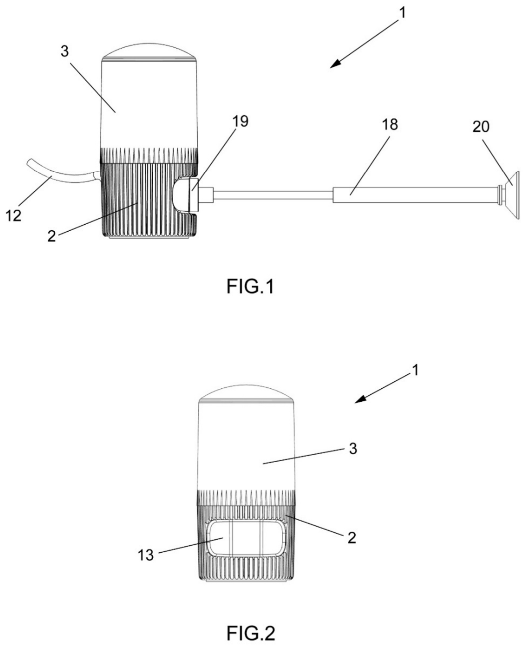

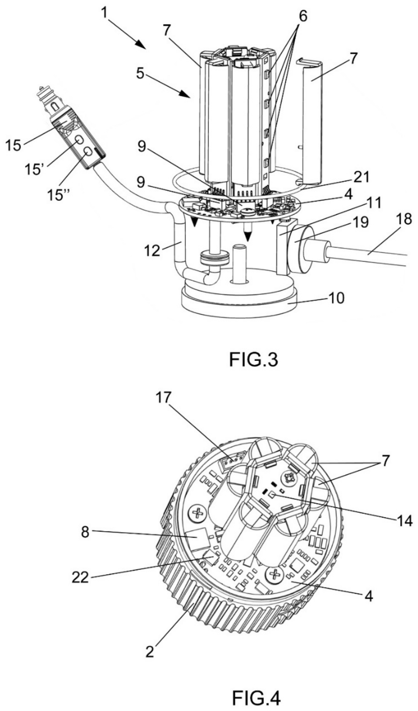

Figures 1 and 2 show the external appearance of the portable emergency beacon light for emergency vehicles according to an embodiment of the present invention. Both Figures 1 and 2 show the beacon light 1 being formed by the lower casing 2 and the upper lens 3, which is fixed to the lower casing 2 by means of screwing the upper lens 3 to the lower casing 2 (see Figure 4). The lower casing (2) has a cylindrical shape with a diameter of less than 8 cm, the beacon light can thus be placed in one of the holes that vehicles usually have for placing beverage jars and bottles. In turn, the upper lens 3 has a conical shape the base of which has a diameter which coincides with the diameter of the lower casing 2.

The sealing gasket 21 (see Figure 3) is arranged between the lower casing 2 and the upper lens 3 to ensure the tightness of the beacon light 1. Figure 1 also shows the beacon light 1 together with the telescopic fixing arm 18, which is fixed to the lower casing 2 by the action of the magnet 19 on the magnetic sensor 11 (see Figure 3). At the end opposite the magnet 19, the telescopic fixing arm 18 has the suction cup 20, which serves to fix the beacon light to a glass pane, such as the windscreen of the emergency vehicle. In order to distinguish the area in which the magnetic sensor 11 is located, the lower casing 2 has a recess 13. Figure 1 also shows the power cable 12, which connected with an emergency vehicle power supply source (not shown), which is usually a 12 v power outlet.

Figure 3 shows the internal components of the portable emergency beacon light for emergency vehicles according to an embodiment of the present invention. The beacon light 1 has the magnet 10 on the base of the lower casing 2. To maximise the attractive force of the magnet on any ferromagnetic surface such as the roof of a vehicle, the magnet 10 is a neodymium magnet that occupies almost the entire area of the base of the beacon light. Above the magnet 10, the beacon light has the power cable 12 that connects the control plate 4 with the power connector 15, which has the two backlit buttons 15' and 15" with which selection can be performed for the beacon light to emit light 180° or 360° horizontally. There can be seen between the magnet 10 and the control plate 4 the magnetic sensor 11, which is arranged on one side of the lower part of the beacon light 1 on the perimeter. The magnet 19 of the telescopic fixing arm 18 is arranged close to the magnetic sensor 11. The control plate 4 has a circular shape and serves as a support for the light emitter 5, the microcontroller 8, the set of drivers 9, the power supply circuit 17, and the input/output circuit 22, among others.

The light emitter 5, see Figure 4, has a hexagonal prism shape where the sets of LED lights 6 are located on each of its six faces, and the optics 7 are located over each set of LED lights 6. The hexagonal prism shape of the light emitter 5 allows the LED lights to be switched on 180° by means of switching on three of its six faces or 360° by means of switching on all six faces of the hexagonal prism of the light emitter 5. In the example shown in Figure 3, each set of LED lights is formed by four LEDs. In turn, the optics 7 are configured to direct the light beams coming from the LED lights so as to comply with the R65 standard, such as category T: +/-4° horizontally for blue and red, +/-8° horizontally for amber. Therefore, the LEDs of each set of LED lights 6 are configured to emit at least blue, red, and amber light.

The light sensor 14 which is connected with the microcontroller 8 to indicate to same the lighting conditions surrounding the beacon light can be seen in Figure 4. In this way, the microcontroller 8 is capable of selecting between daytime light and night-time light for the sets of LED lights 6.

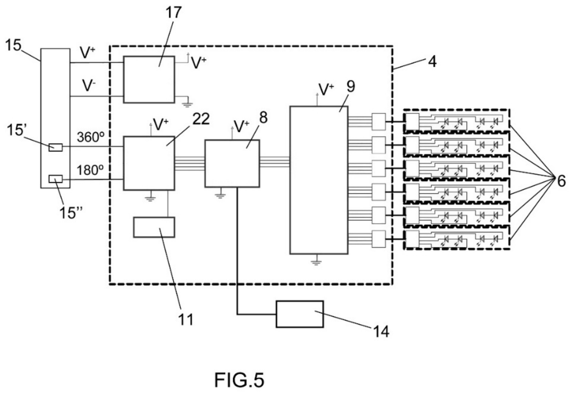

Finally, Figure 5 shows an embodiment of the block diagram of the beacon light 1 of the present invention. The microcontroller 8 is connected with the power supply circuit 17 from which it receives power supply. The microcontroller 8 is also connected with the input/output circuit 22, which is in turn connected with the power connector 15, which has the backlit button 15" for 180° lighting and backlit button 15' for 360° lighting. In this way, the actuation of any of the backlit buttons 15' or 15" generates a signal that reaches the microcontroller 8 for activating the set of LED lights 6 180° or 360°. The microcontroller 8 is also connected with the magnetic sensor 11 (by means of the input/output circuit 22), with the light sensor 14, and with the driver 9. The magnetic sensor 11 is configured to indicate to the microcontroller 8 whether the telescopic fixing arm 18, as a result of the magnet 19, is fixed to the lower casing 2. If this is the case, the microcontroller 8 is configured to activate only three of the six faces of the LED emitter 5, resulting in a 180° horizontal light emission. If this is not the case, and if there is no actuation of any of the backlit buttons 15' and/or 15", the microcontroller 8 is configured to activate all six faces of the LED emitter 5, resulting in a 360° horizontal light emission. Therefore, the 180° or 360° lighting activation can be performed both manually by means of the backlit buttons 15' and 15" of the power connector 15, and automatically by means of moving the magnet 19 closer to the magnetic sensor 11. In case of conflict between manual and automatic mode, the microcontroller 8 is configured to prioritise manual mode over automatic mode. The set of drivers 9 is connected with the microcontroller 8, from which it receives the control signals, and with the power supply circuit 17, from which it receives power supply. The control signals serve to selectively activate/deactivate each of the six sets of LED lights 6 for the emission of light sequences predetermined by the applicable standards (R65, national, regional, local).

## Claims

1. **A portable** emergency beacon light (1) for emergency vehicles, **characterised in that** it comprises:
• a lower casing (2), which has a cylindrical shape with a diameter of less than 8 cm;
• an upper lens (3), which is configured to be fixed to the lower casing;
• a control plate (4) located in the upper part of the lower casing (2);
• a light emitter (5), which has a hexagonal prism shape; where the light emitter (5) is fixed perpendicular to the control plate (4);
where the light emitter (5) comprises, on each of the faces of the hexagonal prism:
∘ a set of LED lights (6);
∘ an optic (7) located over the set of LED lights (6);
• a microcontroller (8) configured to send control signals;
• a set of drivers (9) connected with the microcontroller (8), where each driver of the set of drivers (9) is connected with a set of LED lights (6); and, where each driver of the set of drivers (9) is configured to activate/deactivate each LED of each set of LED lights according to the control signals received from the microcontroller (8).

2. The portable emergency beacon light for emergency vehicles according to claim 1, **characterised in that** it further comprises a magnet (10) in the lower part of the lower casing (2).

3. The portable emergency beacon light for emergency vehicles according to claim 1, **characterised in that** it further comprises a magnetic sensor (11) placed in an inner perimeter part of the lower casing (2), where the magnetic sensor (11) is connected with the microcontroller (8), which is configured to send control signals to the set of drivers (9) for activating the sets of LED lights (6) on three consecutive faces of the light emitter (5) when the magnetic sensor (11) is activated as a result of a magnet.

4. The portable emergency beacon light for emergency vehicles according to claim 3, **characterised in that** the lower casing (2) comprises externally a recess (13) coinciding with the position of the magnetic sensor (11).

5. The portable emergency beacon light for emergency vehicles according to claim 1, **characterised in that** the light emitter (5) comprises a light sensor (14), which is connected with the microcontroller (8); where the light sensor (14) is configured to indicate the environmental light conditions to the microcontroller (8), which is configured to send control signals to the driver (9) for activating the sets of LED lights (6) with light intensity selected from at least 60 cd in night mode at 0° and at least 120 cd in day mode at 0°.

6. The portable emergency beacon light for emergency vehicles according to claim 1, **characterised in that** it comprises a power cable (12), at the end of which there is located a power connector (15) compatible with power supply means comprised in the emergency vehicle.

7. The portable emergency beacon light for emergency vehicles according to claim 6, **characterised in that** the power connector (15) comprises two backlit buttons (15', 15"), which are connected with the microcontroller (8), which is configured to send control signals to the set of drivers (9) for activating the sets of LED lights (6) on three consecutive faces of the light emitter (5) when one (15') of the backlit buttons of the power connector (15) is pressed, and where the microcontroller (8) is configured to send control signals to the set of drivers (9) for activating the sets of LED lights (6) on all six faces of the light emitter (5) when another one (15") of the backlit buttons of the power connector (15) is pressed.

8. The portable emergency beacon light for emergency vehicles according to claim 6, **characterised in that** it further comprises a power supply circuit (17) and an input/output circuit (22), where they are both connected with the microcontroller (8) and with the power connector (15) by means of the power cable (12).

9. The portable emergency beacon light for emergency vehicles according to claim 1, **characterised in that** it further comprises a telescopic fixing arm (18).

10. The portable emergency beacon light for emergency vehicles according to claim 9, **characterised in that** the telescopic fixing arm (18) further comprises a magnet (19) at one of the ends thereof.

11. The portable emergency beacon light for emergency vehicles according to claim 9 or 10, **characterised in that** the telescopic fixing arm (18) further comprises a suction cup (20) at one of the ends thereof.

12. The portable emergency beacon light for emergency vehicles according to claim 1, **characterised in that** the microcontroller (8) and the set of drivers (9) are located on the control plate (4).
